# EUROPEAN PATENT SPECIFICATION

(11) **EP 2 484 432 B1**
(45) Date of publication and mention of the grant of the patent: **27.11.2013**
(21) Application number: 11153217.2
(22) Date of filing: 03.02.2011
(51) Int. Cl.: B01D 69/00, B01D 67/00, B01D 69/14, D01D 5/00, B01D 39/16

(54) **Microfiltration membrane**
Mikrofiltrationsmembran
Membrane de microfiltration

(43) Date of publication of application: 08.08.2012
(73) Proprietor: Helmholtz-Zentrum Geesthacht Zentrum für Material- und Küstenforschung GmbH, 21502 Geesthacht (DE)
(72) Inventor: Elbahri, Mady, 24145 Kiel (DE); Homaeigohar, Seyed Shahin, 21502 Geesthacht (DE)
(74) Representative: Seemann, Ralph

(56) References cited:
- WO-A1-2010/107503
- US-A1- 2007 151 921
- US-A1- 2010 224 555
- Y. WANG, Q. YANG, G. SHAN, C. WANG, J. DU, S. WANG, Y. LI, X. CHEN, X. JING, Y. WEI: "Preparations of silver nanoparticles dispersed in polyacrylonitrile nanofiber film spun by electrospinning", MATERIALS LETTERS, vol. 59, 13 June 2005 (2005-06-13), pages 3046-3049, XP002648940,
- BJORGE D ET AL: "Performance assessment of electrospun nanofibers for filter applications", DESALINATION, ELSEVIER, AMSTERDAM, NL, vol. 249, no. 3, 25 December 2009 (2009-12-25), pages 942-948, XP026751129, ISSN: 0011-9164, DOI: DOI:10.1016/J.DESAL.2009.06.064 [retrieved on 2009-10-08]
- HOMAEIGOHAR S SH ET AL: "Polyethersulfone electrospun nanofibrous composite membrane for liquid filtration", JOURNAL OF MEMBRANE SCIENCE, ELSEVIER SCIENTIFIC PUBL.COMPANY. AMSTERDAM, NL, vol. 365, no. 1-2, 1 December 2010 (2010-12-01), pages 68-77, XP027452868, ISSN: 0376-7388, DOI: DOI:10.1016/J.MEMSCI.2010.08.041 [retrieved on 2010-10-29]

## Description

The invention relates to a membrane for the microfiltration of liquid fluids, in particular for the microfiltration of water. Moreover, the invention relates to a method for producing a membrane for the microfiltration of liquid fluids, in particular for the microfiltration of water. Furthermore, the invention relates to a use of a microfiltration membrane.

Electrospinning has been recognized as an efficient processing method to manufacture nanoscale fibrous structures. This technique is known within the fiber forming industry as electrostatic spinning of liquids and/or solutions capable of forming fibers. Electrospinning of fibers is well known and has been described in numerous patents and also in the general literature.

The electrospinning process deals with the creation of an electrical field at the surface of a liquid. The resulting electrical forces create a jet of liquid which carries electrical charge. These electrically charged jets of liquid travel to a grounded collector which acts as the opposite electrode. The liquid jet while travelling to the collector is highly stretched and elongated. Simultaneously, evaporation of solvent from the jet makes it solid as nanofibers collecting on the collector (Z.M. Huang et al., Composites Science and Technology 2003, 63, 2223-2253).

Electrospun nanofibrous mats are highly porous with interconnected pores in the size range of only a few times to a few ten times the fiber diameter. The promising structural features make them strong candidates for filtration applications. The high porosity implies a higher permeability and the interconnected pores can withstand fouling better.

Furthermore, the small pore size of the nanofibrous non-wovens results in a higher retention (C. Burger et al., Annu. Rev. Mater. Res. 2006, 36, 333-368). Despite promising filtration features, an electrospun membrane possesses a very high porosity and surface area to volume ratio which makes it more exposed to mechanical stresses applied while filtration. Moreover, the high surface area in case of using a hydrophobic membrane material can lower the wettability of the membrane and increase its fouling tendency.

Without mechanical stability, the membrane undergoes mechanical failures such as compaction which reduces porosity and affects the filtration efficiency. Hence, mechanical strengthening of the electrospun nanofibrous membranes could be a very critical objective to broaden the range of their applications.

In order to meet this requirement, several approaches such as heat treatment (S.S. Choi et al., Journal of Materials Science 2004, 39, 1511-1513; Z. Ma et al., Journal of Membrane Science 2006, 272, 179-187) and solvent induced interfiber bonding (K. Yoon et al., Polymer 2009, 50 (13), 2893-2899) have been taken by the researchers to reinforce electrospun nanofibrous mats.

Heat treatment is an approach based on heating the nanofibers up to a temperature higher than glass transition temperature (Tg) and just below melting point (Tₘ). Through this process the fibers are joined at nodes (interfiber bonding) and the interpore connectivity in the web thereby the filtration capability is improved. Interfiber bonding makes the web rigid and mechanically stronger (by enhancing the tensile strength). A drawback of this method is the dimensional shrinkage of heat-treated membranes, when compared with the original membrane dimensions.

Another possibility for enhancement of mechanical properties of the electrospun nanofibrous membranes is based on using a mixed solvent to induce fiber-fiber infusion during electrospinning. This treatment involves the use of mixed solvents such as DMF/NMP, containing a high vapor pressure component (NMP), where the mechanical properties (e.g. modulus and strength) of the membrane are improved by solvent-induced fusion of inter-fiber junction points.

In the case of wettability and fouling tendency, it is known that oily effluents are strongly retained when membrane surfaces are hydrophobic. If the hydrophobicity is significantly enhanced when the surface area increases, therefore it is necessary to hydrophilize the nanofibrous membranes.

So far, different methods to hydrophilize the surface of membranes have been carried out. These methods consist basically in
(a) the short time oxidation treatment with a strong oxidant (K. Yoon et al., Polymer 2009, 50(13), 2893-2899)
(b) mixing polymers with different characteristics with respect to their hydrophobicity/hydrophilicity (S.P. Nunes, J,. Membr. Sci. 73, 1992, 25-35),
(c) grafting hydrophilic branches on hydrophobic polymer backbone (P. Wang, J. Membr. Sci. 195, 2002, 103-114),
(d) the deposition (coating) of hydrophilic films on hydrophobic materials (Byung-Yong Lee et al., J Nanopart Res, Vol. 12, Issue: 7,2511-2519, 2010) (N.A. Ochoa et al., Journal of Membrane Science 226 (2003) 203-211).

The document US-A-2010/0224555 discloses a method for making a compaction and fouling resistant, thin film composite (THF) membrane and a corresponding membrane, wherein the membrane comprises nanoparticles. The membrane is a flat sheet (film) membrane with a TFC (thin film composite) structure, which is to be used as for reverse osmosis (RO) or nanofiltration (NF).

Moreover, US-A-2007/0151921 discloses a self-cleaning membrane formed of nanofibers containing functionalized nanoparticles. The nanofiber membrane is used for the filtration process. The nanofibers are coated with functionalized nanoparticles like TiO₂, wherein titania nanoparticles with photocatalytic activity are used.

The article of Y. Wang et al., "Preparations of silver nanoparticles dispersed in polyacrylonitrile nanofiber film spun by electrospinning", Materials Letters, vol. 59 (2005), pages 3046 - 3049, refers to Ag nanoparticles dispersed in polyacrylonitrile (PAN) nanofiber film spun by electrospinning, wherein the Ag nanoparticles are dispersed in PAN.

The documents WO2010/107503 and S.Sh. Homaeigohar et al., "Polyethersulfone electrospun nanofibrous composite membrane for liquid filtration", J. Mem. Sci. 305 (2010) 68-77 disclose microfiltration membranes comprising mats made of electrospun membranes

It is an object of the invention to provide an improved microfiltration membrane, in particular for the microfiltration of water.

This object is solved through a membrane for the microfiltration of liquid fluids, in particular for the microfiltration of water, characterized in that the membrane comprises electrospun nanofibers, wherein the nanofibers are reinforced with inorganic nanoparticles, wherein the reinforcing nanoparticles are nanoceramic particles made of zirconia (ZrO₂) and wherein a mat made of the electrospun nanofibers is provided as a material selective layer of the membrane.

The invention is based on the idea that a microfiltration membrane, in particular for the microfiltration of water, is made of electrospun composite nanofibers, wherein the membrane comprises for instance a mat made of electrospun nanofibers. The nanofibers are made of a polymer, in particular polyethersulfone (PES) through the incorporation of nanoceramics and inorganic nanoparticles made of zirconia (ZrO₂). The nanoceramic and inorganic nanoparticles enhance the mechanical properties and wettability of the electrospun nanofibers membranes for the filtration of water. Thereby, the permeability and the filtration efficiency of the membrane using composite nanofibers is enhanced in comparison with known microfiltration membranes according to the prior art. Hereby an electrospun composite nanofibers water membrane is provided with an enhanced water permeability.

Moreover, the microfiltration membranes according to the invention have a lower hydrophobicity and a lower fouling tendency compared to membranes made of non-reinforced nanofibers or made of nanofibers without reinforcing nanoparticles and nanoceramic particles.

Above all, the inventive microfiltration membrane has several folds higher permeability than conventional microfiltration membranes.

Through the use of reinforcing nanoceramic particles as nanoparticles, the structural stability of the electrospun membrane is enhanced, wherein possible failures or breakdowns such as compaction are prevented during the filtration.

Thus, the reinforcing nanoparticles of the nanofibers are nanoceramic particles.

Furthermore, it is beneficial in one embodiment of the microfiltration membrane that the average size of the reinforcing nanoparticles is at least between 10 nm to 120 nm, in particular at least between 20 nm to 100 nm, further in particular between 20 nm to 70 nm.

Moreover, it is advantageous that the composite nanofibers are made out of a polymer/nanoparticle solution.

Furthermore it is provided in accordance with an advantageous embodiment of the membrane that the diameter, in particular the average diameter, of the reinforced nanofibers is between at least 50 nm to 500 nm, in particular between 100 nm to 350 nm.

Furthermore in a further embodiment it is also considerable, that for the, in particular electrospun, nanofibers at least one polymer is selected from the group of polyethersulfone (PES) or polysulfone (PS) or polyvinylidene fluoride (PVDF) or polyacrylonitrile (PAN) or combinations thereof.

In particular according to an advantageous embodiment of the nanofiltration membrane an electrospun membrane is made of polyethersulfone (PES) through the incorporation of nanoceramic particles made of zirconia. Hereby, the nanofibers, in particular PES nanofibers, containing zirconia nanoparticles are made through a physical blending for the preparation of a solution and subsequently electrospinning process.

For example, PES is a suitable material for a membrane, in particular microfiltration or ultrafiltration membrane, since polyethersulfone (PES) possesses high mechanical properties, high heat distortion temperatures and heat-aged resistance, environmental endurance and also high chemical resistance to various acids and alkalis, and easy fabricability in a wide variety of configurations and modules.

Moreover, zirconia is a suitable inorganic material that exhibits good mechanical properties of oxide (nano) ceramics.

Furthermore, the object of the invention is solved by a method for producing a membrane for the microfiltration of liquid fluids, in particular for the microfiltration of water, with the following steps:
a) providing a polymer solution comprising at least one polymer and inorganic nanoparticles, wherein the nanoparticles are nanoceramic particles made of zirconia (ZrO₂)
b) producing electrospun nanofibers by the use of an electrospinning device, wherein the nanofibers are reinforced with the nanoparticles, on the basis of the polymer solution
c) producing a material selective layer of the microfiltration membrane from the electrospun nanofibers.

In order to produce nanofibers by applying the electrospinning technic, a polymer solution with at least one polymer and nanoparticles made of zirconia is provided, wherein the polymer and the inorganic nanoparticles are soluble in the presence of a suitable solvent.

For this purpose, it is also provided that a mixture is produced by mixing a solvent and the inorganic nanoparticles, wherein subsequently a polymer is added to the, preferably nanogenized, mixture in order to provide the polymer solution for the electrospinning process.

Furthermore, it is preferred in the development of the method that the mixture of the solution and the nanoparticles is charged with ultrasonic waves for a predetermined time period, for instance between at least 0.5 hours to 3 hours, and/or is mixed by means of a, in particular magnetic, stirrer.

In particular it is beneficial, if the polymer solution for the electrospinning process is homogenized by the use of a, in particular magnetic, stirrer for a predetermined time period. For instance, the polymer solution is homogenized through a stirring period of at least between 0.5 hours to 3 hours.

Moreover, it is advantageous if the share of the nanoparticles in the electrospun nanofibers is at least between 0.1 wt% (weight percent) to 15 wt% (weight percent), in particular between 0.5 wt% and 12.5 wt%.

Furthermore it is in particular beneficial, if the solvent is selected from the group of, in particular aprotic, solvents, preferably dimethylformamide (DMF), N, N-dimethylmethanamide, dimethylacetamide (DMAc), dichloromethane (DCM), tetrahydrofuran (THF), ethyl acetate, acetone, acetonitrile, dimethyl sulfoxide (DMSO). These are in particular polar aprotic solvents.

Above all, the object of the invention is also solved by the use of a microfiltration membrane of liquid fluids, in particular for the microfiltration of water, with a membrane according to the above description and/or a membrane obtainable according to the above-mentioned method or by carrying out the above-mentioned method steps.

According to the pre-described method a microfiltration membrane is produced, wherein the achieved microfiltration membrane has the characteristics of the above mentioned membrane. In order to avoid repetition reference is expressly made to the above explanation for a method and for the membrane.

According to the invention, microfiltration membranes, in particular water microfiltration membranes, are obtained by producing electrospun nanofibers in order to provide a mat made of the electrospun nanofibers as a material selective layer of a membrane.

The produced microfiltration membranes have a several times higher permeability compared to conventional produced microfiltration membranes. In order to stabilize the electrospun nanofibers of the membranes, nanoceramics are integrated into the structure of nanofibers made of a polymer. Therefore, the used nanoparticles or nanoceramics have the function to reinforce the structure of the nanofibers respectively the polymer structure of the achieved electrospun nanofibers. The used nanoceramic particles of zirconia hinder the mobility of the polymer chains available in the nanofibers or even physically crosslink them. Additionally the nanoceramic particles absorb the tight (mechanical) stresses while the filtration and thereby enhance the resistance of the membrane against deformation and collapsing. Through the integration of nanoceramic particles made of zirconia into the nanofibrous structure higher mechanical properties of the nanofibers and in general for the nanofibrous membrane are obtained. As a result a higher resistance to mechanical breakdowns including compaction or tensile disintegration is achieved, whereby the high porosity and water permeability of the electrospun nanofibrous water membranes is preserved.

Moreover, the reinforcing nanoceramic particles or nanoceramics increase also the water filtration efficiency by lowering the hydrophobicity of membranes made of the same material without nanoceramic particles. Nanoceramic particles in the nanofibers are hydrophilic and polar and induce a higher wettability to the membranes at exposure on the surface of the membrane. Especially the enhancement of hydrophilicity of microfiltration membranes according to the invention will be observed.

Therefore, the microfiltration membranes according to the invention show a higher porosity, improved mechanical properties and higher wettability.

Moreover, a membrane for water filtration respectively microfiltration of liquid fluids is provided, wherein the membrane or the materials selective layer of the membrane is made of inorganic nanoparticlesreinforced electrospun nanofibers. The nanofibers are made for instance of polyethersulfone (PES) with a, in particular averaged, diameter of between 150 nm to 450 nm. The nanoparticles are made of zirconia with an average size of between 25 nm to 100 nm, in particular between 29 nm to 68 nm.

For instance a microfiltration membrane made of a solution of zirconia and PES with different amounts of zirconia possesses a higher compaction resistance or a lower compaction index compared to membranes only made of PES (without zirconia). Therefore, microfiltration membranes made of a zircona/PES-mixture show improved properties: The higher the content of zirconia, the higher the tensile properties of membranes than those of the membranes made only of PES (and without zirconia) are.

The microfiltration membranes, made from nanofibers comprising nanoceramics and at least one polymer, show a low compaction index, high wettability, high permeability for instance for water, a low pressure drop, a low energy consumption, an improved longevity and a lower fouling tendency.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on an exemplary embodiment, wherein reference is expressly made to the figures with regard to the disclosure of all details according to the invention that are not explained in greater detail in the text. The drawings show in:
- Fig. 1: schematically an illustration of the preparation process of nanofibers;
- Fig. 2a to Fig. 2d: schematically diagrams for the elastic modulus, tensile strength elongation and the result of dynamic mechanical analysis;
- Fig. 3: a diagram of a water contact angle for several membranes made of nanofibers;
- Fig. 4: a diagram of the water flux of the microfiltration membranes made of nanofibers and
- Fig. 5: several scanning electron microscope images of electrospun nanofibers.

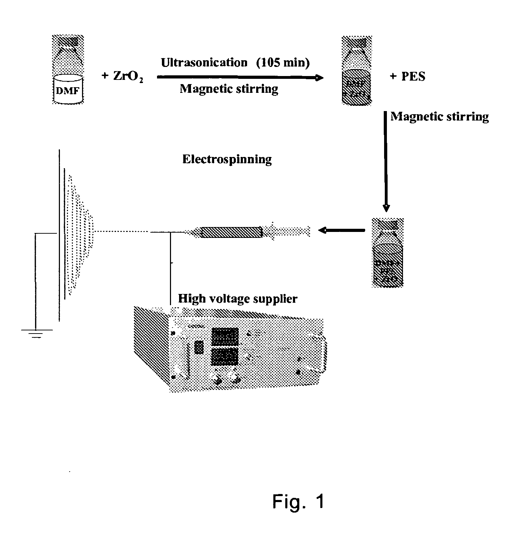

Fig. 1 shows schematically the process of producing nanofibers to obtain composite nanofibers made of zirconia and PES/zirconia (ZrO₂) solved in the solvent DMF, wherein first a mixture of DMF and zirconia is stirred by means of a magnetic stirrer. Moreover, the mixture is applied with ultrasonic waves for a period of 105 minutes.

Afterwards, polyethersulfone (PES) is added to the homogenized zirconia/DMF solution in order to provide a polymer solution for the production of nanofibers. The polymer solution afterwards is stirred by a magnetic stirrer in order to apply the homogenized polymer solution to an electrospinning device.

By means of the electrospinning device nanofibers made of zirconia and PES are obtained. Afterwards, the obtained nanofibers of zirconia and PES are used to produce a microfiltration membrane, wherein the material selective layer is made of the nanofibers. Therefore, a nanofibers composite membrane for microfiltration, in particular for the microfiltration of water, is obtained.

The nanofibers containing PES and zirconia nanoparticles are made through a physical blending for preparation a solution and subsequently applying the electrospinning process under the following condition:
Concentration of PES 20 wt%, DMF as solvent, voltage of the electrospinning device 20 KV, collecting plate of aluminium foil, spinning distance of 25 cm, and speed rate of 0.5 ml/h. The used zirconia nanoparticles with an average particle size of 29 to 68 nm were added to the solvent at concentration of 1 wt% and 5 wt% to the PES nanofibers.

In table 1 the compaction index of membranes made of PES and PES/zirconia are given. It is obvious from table 1 that the compaction index decreases by adding zirconia to the polymer solution.

**Table 1 Compaction index of the zirconia (ZrO₂) /PES nanofibrous membranes**

| Content of zirconia (ZrO₂) (wt%) | Compaction index (%) |
|---|---|
| 0 | 52 |
| 1 | 40 |
| 5 | 41 |

The added zirconia nanoparticles, which are oxide nanoceramics, hinder the mobility of the polymer chains available in the nanofibers or even physically crosslink the nanofibers.

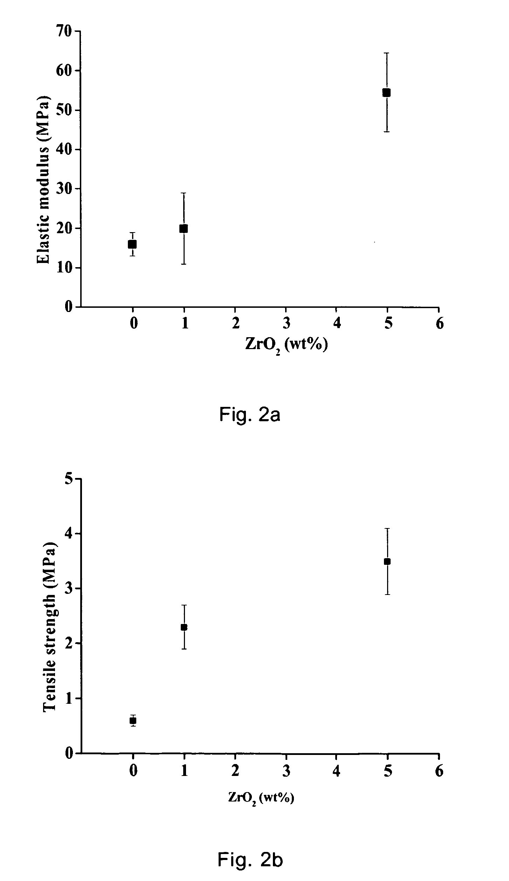

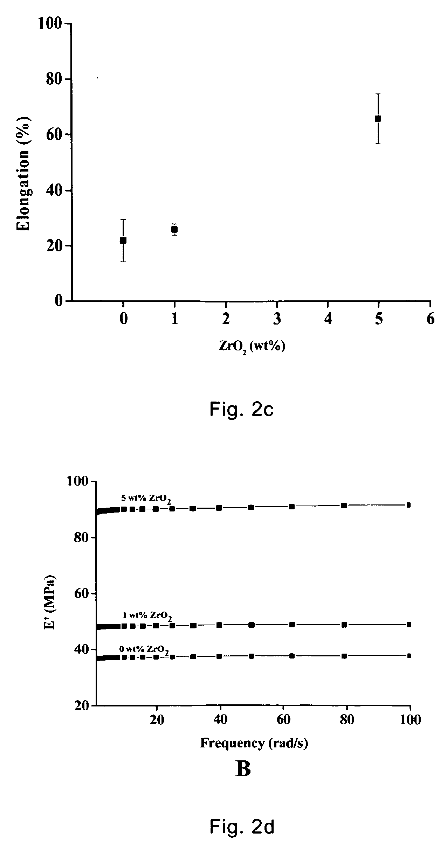

As can be seen from the diagrams shown in Fig. 2a the elastic modules and also the tensile strength (cf. Fig. 2b) and the elongation of the nanofibers (Fig. 2c) raise in dependency of the increasing amount of zirconia in the nanofibers.

Also, nanofibers with contents of zirconia show better mechanical results as can be seen from the dynamic mechanical analysis results shown in Fig. 2d.

In Fig. 2d the storage modulus (E') is shown as a result of the dynamic mechanical analysis (DMA).

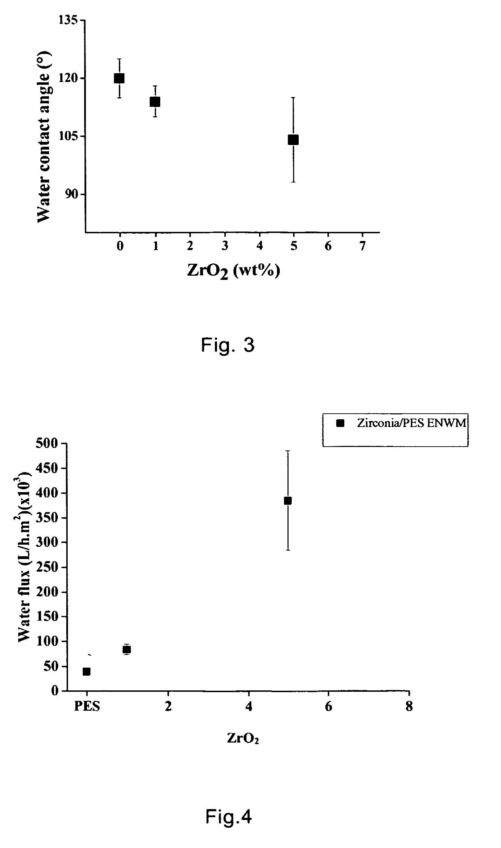

The obtained nanofibers were used to produce microfiltration membranes, wherein in Fig. 3 the water contact angle was measured for the neat and zirconia reinforced PES electrospun nanofibers membranes. As can be seen in Fig. 3, the water contact angle decreases depending on increasing content of zirconia.

So, zirconia has an influence on the hydrophobicity of PES and lowers the hydrophobicity of zirconia reinforced PES nanofibers microfiltration membranes. Therefore, nanoceramic particles such as zirconia are inherently hydrophilic and polar. So in case of being exposed to the surface the nanoceramic particles of the nanofibers induce a higher wettability to the membranes.
Fig. 4 shows the results of the measurement of the water flux of the neat and nanoceramic particle reinforced PES electrospun nanofibers microfiltration membrane, wherein the water flux is enhanced for the membranes with nanofibers made of zirconia and PES in comparison to membranes made of neat PES nanofibers.

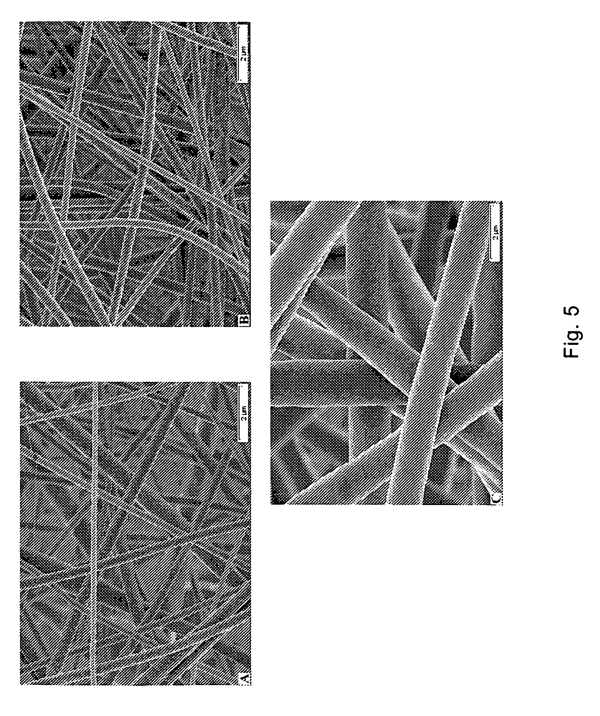

Fig. 5 shows scanning electron microscope images of the nanofibers made of PES or PES with the addition of zirconia. Image A shows the morphology of PES nanofibers with 0% zirconia, image B electrospun nanofibers made of PES and 1 wt% zirconia and image C nanofibers made from PES and 5 wt% zirconia.

As illustrated in Fig. 4, the composite microfiltration membranes show significantly higher water permeability compared to the neat microfiltration membrane made of PES nanofibers. The water filtration membrane with a higher amount of zirconia, for instance 5 wt%, shows a higher permeability which can be related to bigger fibers present in the structure of the membrane, which at the same surface density lead to bigger pores (cf. Fig. 5, image C).

However, with an amount of 1 wt% zirconia in the PES nanofibers (cf. Fig. 5, image B) these nanofibers show nearly the same nanofiber diameter as the neat PES microfiltration membrane (cf. Fig. 5, image A). The zirconia containing microfiltration membrane has nearly a two time higher water permeability than the neat nanofibers membrane.

Furthermore, also the preparation of nanofibers made of PES and titanium the obtained nanofibers have a similar or slightly smaller nanofiber diameter than the neat ones, but also showed a several folds higher water permeability compared to the neat PES nanofiber microfiltration membranes.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics.

## Claims

1. A membrane for the microfiltration of liquid fluids, in particular for the microfiltration of water, wherein the membrane comprises electrospun nanofibers, **characterized in that** the nanofibers are reinforced with inorganic nanoparticles, wherein the reinforcing nanoparticles are nanoceramic particles made of zirconia (ZrO₂) and wherein a mat made of the electrospun nanofibers is provided as a material selective layer of a membrane.

2. The membrane according to claim 1, **characterized in that** the average size of the reinforcing nanoparticles is between 10 nm to 120 nm, in particular between 20 nm to 100 nm, further in particular between 20 nm to 70 nm.

3. The membrane to claim 1 or 2, **characterized in that** the nanofibers are made out of a polymer/nanoparticles solution.

4. The membrane according to any of the claims 1 to 3, **characterized in that** the diameter, in particular the average diameter, of the reinforced nanofibers is between 50 nm to 500 nm, in particular between 100 nm to 350 nm.

5. The membrane according to any of the claims 1 to 4, **characterized in that** for the electrospun nanofibers at least one polymer is selected from the group of polyethersulfone (PES) or polysulfone (PS) or polyvinylidene fluoride (PVDF) or polyacrylonitrile (PAN) or combinations thereof.

6. A method for producing a membrane for the microfiltration of liquid fluids, in particular for the microfiltration of water, with the following steps:
a) providing a polymer solution comprising at least one polymer and inorganic nanoparticles, wherein the reinforcing nanoparticles are nanoceramic particles made of zirconia (ZrO₂),
b) producing electrospun nanofibers by the use of an electrospinning device, wherein the nanofibers are reinforced with the nanoparticles, on the basis of the polymer solution
c) producing a mat as a material selective layer of the microfiltration membrane from the electrospun nanofibers.

7. The method according to claim 6, **characterized in that** a mixture is produced by mixing a solvent and the inorganic nanoparticles, wherein subsequently a polymer is added to the mixture in order to provide the polymer solution for the electrospinning process.

8. The method according to claim 7, **characterized in that** the mixture of the solution and the nanoparticles is charged with ultrasonic waves for a predetermined time period and/or is mixed by means of a, in particular magnetic, stirrer.

9. The method according to claim 7 or 8, **characterized in that** the polymer solution is homogenized by the use of a, in particular magnetic, stirrer for a predetermined time period.

10. The method according to any of the claims 6 to 9, **characterized in that** the share of the nanoparticles in the electrospun nanofibers is between 0.1 wt% (weight percent) to 15 wt% (weight percent), in particular between 0.5 wt% and 12.5 wt%.

11. The method according to any of the claims 6 to 10, **characterized in that** the solvent is selected from the group of, in particular aprotic, solvents, preferably dimethylformamide (DMF), N,N-dimethylmethanamide, dimethylacetamide (DMAc), dichloromethane (DCM), tetrahydrofuran (THF), ethyl acetate, acetone, acetonitrile, dimethyl sulfoxide (DMSO).

12. Use of a microfiltration membrane of liquid fluids, in particular for the microfiltration of water, with a membrane according to the claims 1 to 5 and/or a membrane obtainable according to the claims 6 to 11.

## Patentansprüche

1. Membran für die Mikrofiltration von flüssigen Fluiden, insbesondere für die Mikrofiltration von Wasser, wobei die Membran elektrogesponnene Nanofasern umfasst, **dadurch gekennzeichnet, dass** die Nanofasern mit anorganischen Nanopartikeln verstärkt sind, wobei die Verstärkungsnanopartikel aus Zirkoniumdioxid (ZrO₂) hergestellte nanokeramische Partikel sind und wobei eine aus den elektrogesponnenen Nanofasern hergestellte Matte als materialselektive Schicht einer Membran vorgesehen ist.

2. Membran nach Anspruch 1, **dadurch gekennzeichnet, dass** die mittlere Größe der Verstärkungsnanopartikel zwischen 10 nm und 120 nm, insbesondere zwischen 20 nm und 100 nm, ferner insbesondere zwischen 20 nm und 70 nm beträgt.

3. Membran nach Anspruch 1 oder 2, **dadurch gekennzeichnet, dass** die Nanofasern aus einer PolymerNanopartikel-Lösung hergestellt sind.

4. Membran nach einem der Ansprüche 1 bis 3, **dadurch gekennzeichnet, dass** der Durchmesser, insbesondere der mittlere Durchmesser, der verstärkten Nanofasern zwischen 50 nm und 500 nm, insbesondere zwischen 100 nm und 350 nm liegt.

5. Membran nach einem der Ansprüche 1 bis 4, **dadurch gekennzeichnet, dass** für die elektrogesponnenen Nanofasern mindestens ein Polymer aus der Gruppe aus Polyethersulfon (PES) oder Polysulfon (PS) oder Polyvinylidenfluorid (PVDF) oder Polyacrylnitril (PAN) oder Kombinationen daraus ausgewählt ist.

6. Verfahren zum Herstellen einer Membran für die Mikrofiltration von flüssigen Fluiden, insbesondere für die Mikrofiltration von Wasser, mit den folgenden Schritten:
a) Bereitstellen einer Polymerlösung, die mindestens ein Polymer und anorganische Nanopartikel umfasst, wobei die Verstärkungsnanopartikel aus Zirkoniumdioxid (ZrO₂) hergestellte nanokeramische Partikel sind,
b) Herstellen elektrogesponnener Nanofasern unter Verwendung einer Elektrospinnvorrichtung, wobei die Nanofasern mit den Nanopartikeln verstärkt sind, auf der Grundlage der Polymerlösung
c) Herstellen einer Matte als materialselektive Schicht der Mikrofiltrationsmembran aus den elektrogesponnenen Nanofasern.

7. Verfahren nach Anspruch 6, **dadurch gekennzeichnet, dass** eine Mischung durch Mischen eines Lösungsmittels und der anorganischen Nanopartikel hergestellt wird, wobei der Mischung anschließend ein Polymer zugegeben wird, um die Polymerlösung für den Elektrospinnvorgang bereitzustellen.

8. Verfahren nach Anspruch 7, **dadurch gekennzeichnet, dass** die Mischung aus der Lösung und den Nanopartikeln über einen vorher festgelegten Zeitraum mit Ultraschallwellen behandelt wird und/oder mit einem Rührer, insbesondere einem Magnetrührer, gemischt wird.

9. Verfahren nach Anspruch 7 oder 8, **dadurch gekennzeichnet, dass** die Polymerlösung unter Verwendung eines Rührers, insbesondere eines Magnetrührers, über einen vorher festgelegten Zeitraum homogenisiert wird.

10. Verfahren nach einem der Ansprüche 6 bis 9, **dadurch gekennzeichnet, dass** der Anteil der Nanopartikel in den elektrogesponnenen Nanofasern zwischen 0,1 Gew.-% (Gewichtsprozent) und 15 Gew.-% (Gewichtsprozent), insbesondere zwischen 0,5 Gew.-% und 12,5 Gew.-%, liegt.

11. Verfahren nach einem der Ansprüche 6 bis 10, **dadurch gekennzeichnet, dass** das Lösungsmittel aus der Gruppe aus, insbesondere aprotischen, Lösungsmitteln ausgewählt wird, vorzugsweise Dimethylformamid (DMF), N,N-Dimethylmethanamid, Dimethylacetamid (DMAc), Dichlormethan (DCM), Tetrahydrofuran (THF), Essigsäureethylester, Aceton, Acetonitril, Dimethylsulfoxid (DMSO).

12. Verwendung einer Mikrofiltrationsmembran für flüssige Fluide, insbesondere für die Mikrofiltration von Wasser, mit einer Membran nach den Ansprüchen 1 bis 5 und/oder einer Membran, die nach den Ansprüchen 6 bis 11 herstellbar ist.

## Revendications

1. Une membrane pour la microfiltration de fluides liquides, en particulier pour la microfiltration de l'eau, dans laquelle la membrane comprend des nanofibres électrofilées, **caractérisée en ce que** les nanofibres sont renforcées par des nanoparticules inorganiques, les nanoparticules de renforcement étant des particules nanocéramiques en zircone (ZrO₂) et un tapis fait de nanofibres électrofilées étant utilisé en tant que couche sélective de matière d'une membrane.

2. La membrane selon la revendication 1, **caractérisée en ce que** la taille moyenne des nanoparticules de renforcement est comprise entre 10 nm et 120 nm, notamment entre 20 nm et 100 nm et plus particulièrement entre 20 nm et 70 nm.

3. La Membrane selon la revendication 1 ou la revendication 2, **caractérisée en ce que** les nanofibres sont fabriquées à partir d'une solution de nanoparticules polymère.

4. La membrane selon l'une des quelconques revendications 1 à 3, **caractérisée en ce que** le diamètre, en particulier le diamètre moyen, des nanofibres renforcées est compris entre 50 nm et 500 nm et notamment entre 100 nm et 350 nm.

5. La membrane selon l'une des quelconques revendications 1 à 4, **caractérisée en ce que** pour les nanofibres électrofilées, au moins un polymère est choisi dans le groupe des polyéthersulfone (PES) ou des polysulfone (PS) ou du fluorure de vinylidène (PVDF) ou du polyacrylonitrile (PAN) ou des combinaisons de ceux-ci.

6. Un procédé de fabrication d'une membrane pour la microfiltration de fluides liquides, en particulier pour la microfiltration de l'eau, comprenant les étapes suivantes :
a) utiliser une solution de polymère comprenant au moins un polymère et des nanoparticules inorganiques, les nanoparticules de renforcement étant des particules de nanocéramiques en zircone (ZrO₂),
b) produire des nanofibres électrofilées par l'utilisation d'un dispositif d'électrofilature, les nanofibres étant renforcées par les nanoparticules sur la base de la solution de polymère,
c) produire un tapis utilisable en tant que couche sélective de matière de la membrane de microfiltration à partir des nanofibres électrofilées.

7. Le procédé selon la revendication 6, **caractérisé en ce qu'**un mélange est produit en mélangeant un solvant et les nanoparticules inorganiques, un polymère étant ensuite ajouté au mélange afin de constituer la solution de polymère pour le procédé d'électrofilature.

8. Le procédé selon la revendication 7, **caractérisé en ce que** le mélange de la solution et des nanoparticules est chargé avec des ondes ultrasonores pendant une période de temps prédéterminée et/ou est mélangé au moyen d'un agitateur, en particulier un agitateur magnétique.

9. Le procédé selon la revendication 7 ou la revendication 8, **caractérisé en ce que** la solution de polymère est homogénéisée par l'utilisation d'un agitateur, en particulier un agitateur magnétique, pendant une période de temps prédéterminée.

10. Le procédé selon l'une des quelconques revendications 6 à 9, **caractérisé en ce que** la proportion des nanoparticules dans les nanofibres électrofilées est comprise entre 0,1 % en poids (pour cent en poids) et 15 % en poids (pour cent en poids), et en particulier entre 0,5 % en poids et 12,5 % en poids.

11. Le procédé selon l'une des quelconques revendications 6 à 10, **caractérisé en ce que** le solvant est choisi dans le groupe des solvants, en particulier aprotiques, de préférence parmi le diméthylformamide (DMF), la N,N-dimethylmethanamide, le diméthylacétamide (DMAc), le dichlorométhane (DCM), le tétrahydrofurane (THF), l'acétate d'éthyle, l'acétone, l'acétonitrile, le diméthylsulfoxyde (DMSO).

12. Utilisation d'une membrane de microfiltration de fluides liquides, en particulier pour la microfiltration de l'eau, avec une membrane selon l'une des revendications 1 à 5 et/ou d'une membrane pouvant être obtenue selon l'une des revendications 6 à 11.
